Europäisches Patentamt

European Patent Office

Office européen des brevets

(11) Veröffentlichungsnummer: **0 509 192 A1**

## (12) EUROPÄISCHE PATENTANMELDUNG

(21) Anmeldenummer: **92101230.8**

(51) Int. Cl.5: **H02G 1/12**

(22) Anmeldetag: **27.01.92**

(30) Priorität: **17.04.91 CH 1148/91**

(43) Veröffentlichungstag der Anmeldung:
**21.10.92 Patentblatt 92/43**

(84) Benannte Vertragsstaaten:
**CH DE IT LI**

(71) Anmelder: **TTC TECHNOLOGY TRADING COMPANY**
**Postfach**
**CH-6045 Meggen(CH)**

(72) Erfinder: **Koch, Max, Dipl. Elektro-Ing.**
**Blosseggrain 8**
**CH-6045 Meggen(CH)**

(74) Vertreter: **Reichmuth, Hugo Werner**
**INVENTIO AG Seestrasse 55**
**CH-6052 Hergiswil/NW(CH)**

(54) **Einrichtung zum Trennen und Abisolieren elektrischer Kabel in einer Kabelverarbeitungsmaschine.**

(57) Mit dieser Einrichtung kann ein elektrisches Kabel bei minimalem Zeitaufwand getrennt und auf verschiedene Längen abisoliert werden, ohne dass das Trenn- und Abisolierwerkzeug bei Aenderung der Abisolierlänge und/oder des Kabelsquerschnittes ausgewechselt werden muss. Zu diesem Zweck sind in zwei Messerhaltern (42, 43) je zwei Abisoliermesser (45) in einem bestimmten, festen Abstand (D) von einem Trennmesser (44) angeordnet. Die Abisoliermesser (45) sind gegenüber den Trennmessern (44) um einen Betrag (K) derart verkürzt, das während eines ersten Teiles des Arbeitshubes nur das Kabel (6) getrennt wird. Ein Abzugsantrieb zieht die Kabelenden von der Trennstelle auf die gewünschte Abisolierlänge zurück, worauf während eines zweiten Teiles des Arbeitshubes die Isolation eingeschnitten, und während einer weiteren Rückzugsbewegung der Kabelenden bei geschlossenen Abisoliermessern (45) der Isolationsabfall abgezogen wird.

Fig.5a

EP 0 509 192 A1

Die Erfindung betrifft eine Einrichtung zum Trennen und Abisolieren elektrischer Kabel in einer Kabelverarbeitungsmaschine, wobei die Einrichtung ein Werkzeug aufweist, das aus einem ersten und zweiten Messerhalter besteht, in welchen je ein Trennmesser und zwei Abisoliermesser angeordnet sind, und wobei ein Antrieb für die Betätigung des Werkzeuges vorgesehen ist.

Mit Kabelverarbeitungsmaschinen können beispielsweise für Elektroapparate oder Kraftfahrzeuge elektrische Kabel verschiedenster Länge rationell in grösseren Stückzahlen hergestellt werden. Die Kabel werden meist von in Rollen angelieferten Material in der erforderlichen Länge abgeschnitten und an beiden Enden abisoliert, wobei die Enden, wenn nötig, mit Steckern oder anderen Anschlusselementen ausgerüstet werden können.

Aus der Betriebsanleitung 40-S, 1989, der Firma KOMAX AG, Dierikon/CH, ist ein für derartige Maschinen geeignetes Trenn- und Abisolierwerkzeug bekannt, das aus einem ersten und zweiten Messerhalter besteht, in welchen je ein Trennmesser und zwei Abisoliermesser angeordnet sind. Die Abisoliermesser sind in einem, der gewünschten Abisolierlänge entsprechenden Abstand vom Trennmesser angeordnet. Um vielseitig verwendbare Werkzeuge zu erhalten, wird der Abstand durch Distanzplatten eingestellt, wobei Abstufungen von beispielsweise 0,5 Millimeter möglich sind. Mit derartigen Werkzeugen kann das Kabel während eines Arbeitshubes getrennt und gleichzeitig die Isolation eingeschnitten werden. Bei Aenderung der Abisolierlänge muss das Werkzeug aus der Maschine entfernt und neu eingestellt werden, so dass die Kabelverarbeitung unterbrochen wird und unerwünschte Stillstandzeiten entstehen.

In einer Druckschrift der Firma Shin Meiwa Industry Co. Ltd., Yokohama/JP, wird ein Werkzeug beschrieben, das bei Aenderung der Abisolierlänge nicht ausgewechselt werden muss. Dieses Werkzeug weist nur ein Trennmesserpaar auf, das auch für die Abisolierung des Kabels verwendet wird. Zum Zwecke der Abisolierung wird das Kabel nach dem Trennen um die gewünschte Abisolierlänge zwischen die wieder geöffneten Trennmesser geschoben. Da bei diesem Verfahren für das Trennen und Einschneiden der Isolation zwei Arbeitshübe benötigt werden, ist die Zeit für diesen Arbeitsgang mindestens doppelt so gross wie bei Anwendung eines Werkzeuges gemäss des im vorhergehenden Abschnitt genannten Standes der Technik. Bei Herstellung grösserer Mengen Kabel mit gleicher Abisolierlänge kann daher der Zeitverlust beträchtlich sein.

Der Erfindung liegt die Aufgabe zugrunde, die Einrichtung gemäss Oberbegriff derart zu verbessern, dass das Werkzeug bei Aenderung der Abisolierlänge nicht mehr ausgewechselt werden muss und die für Trennen und Abisolieren benötigte Zeit gegenüber dem zuletzt genannten Stand der Technik verringert wird.

Diese Aufgabe wird durch die im Patentanspruch 1 gekennzeichnete Erfindung gelöst. Hierbei sind die Abisoliermesser in einem bestimmten festen Abstand vom Trennmesser angeordnet und gegenüber diesen derart verkürzt, dass während eines ersten Teiles des Arbeitshubes nur das Kabel getrennt wird. Ein Abzugsantrieb zieht die Kabelenden von der Trennstelle auf die gewünschte Abisolierlänge zurück, worauf während eines zweiten Teiles des Arbeitshubes die Isolation eingeschnitten, und während einer weiteren Rückzugsbewegung der Kabelenden bei geschlossenen Abisoliermessern der Isolationsabfall abgezogen wird.

Die mit der Erfindung erzielten Vorteile sind insbesondere darin zu sehen, dass der feste Abstand zwischen dem Trennmesser und den Abisoliermessern so gewählt werden kann, dass Abisolierlängen in einem weiten Bereich möglich sind und daher praktisch keine Stillstandzeiten wegen Auswechseln des Werkzeuges entstehen. Der gegenüber dem zuletztgenannten Stand der Technik erzielte Vorteil liegt darin, dass der Arbeitsgang des Trennens und Abisolierens weniger Zeit beansprucht und das dafür erforderliche Steuerungsprogramm einfacher ist.

Im folgenden wird die Erfindung anhand eines auf der Zeichnung dargestellten Ausführungsbeispieles näher erläutert. Es zeigen:

Fig. 1 den Grundriss einer Kabelverarbeitungsmaschine mit der erfindungsgemässen Einrichtung in vereinfachter Darstellung,

Fig. 2 eine teilweise geschnittene Ansicht eines Teiles der Kabelverarbeitungsmaschine in Pfeilrichtung A, in gegenüber der Fig 1 vergrössertem Massstab,

Fig. 3a einen Schneidekopf der erfindungsgemässen Einrichtung mit einem Werkzeug für Trennung und Abisolierung eines Kabels in der Ausgangsstellung,

Fig. 3b den Schneidekopf gemäss Fig. 3a mit dem Werkzeug in der Endstellung,

Fig. 4a-4c das mit V-Abisoliermessern ausgerüstete Werkzeug in drei verschiedenen Arbeitsstellungen und

Fig. 5a-5d eine schematische Darstellung des mit Form-Abisoliermessern ausgerüsteten Werkzeuges mit dem Kabel in mehreren Bearbeitungsstellungen.

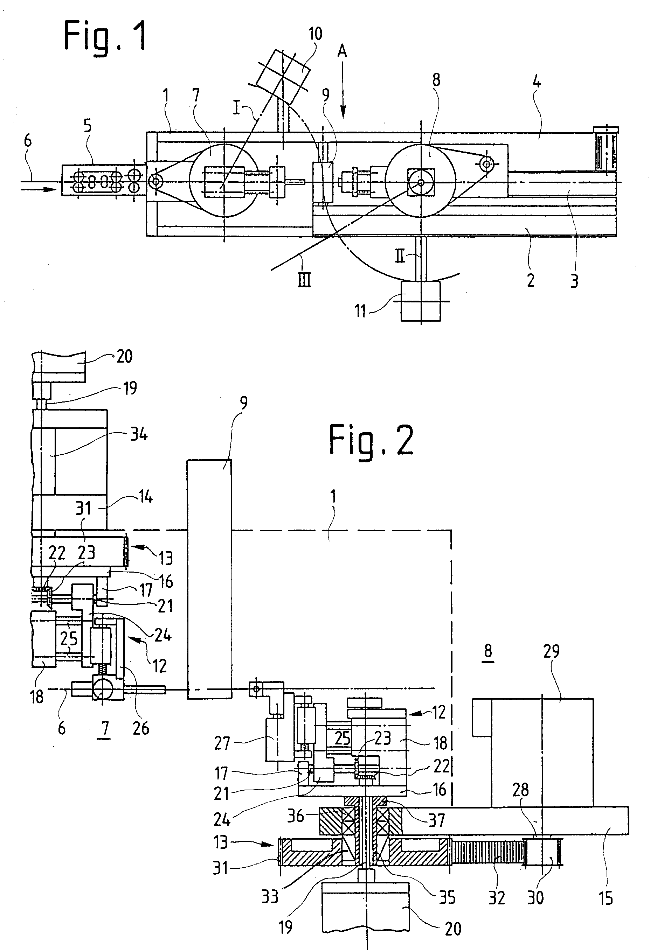

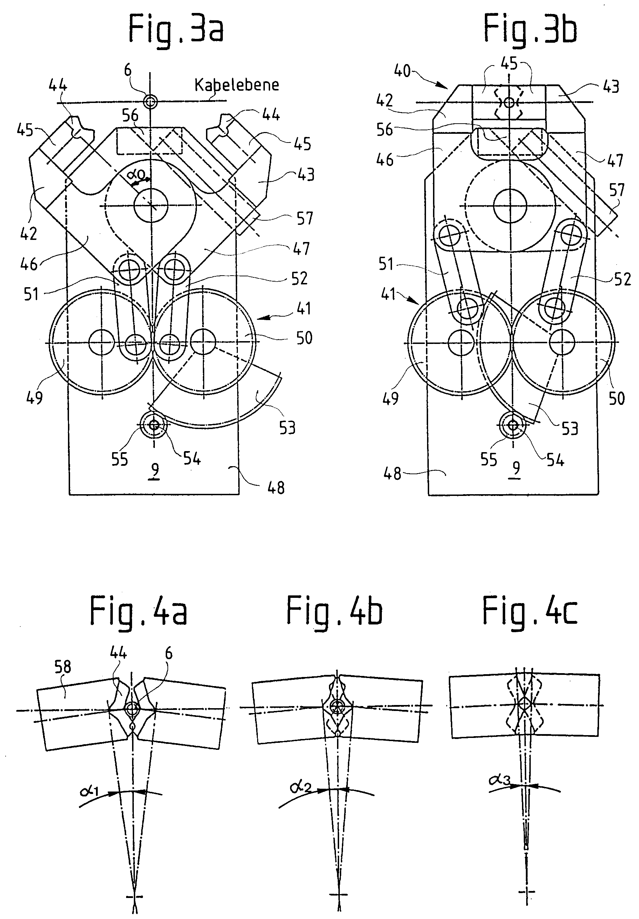

In der Fig. 1 ist mit 1 ein Maschinengestell einer Kabelverarbeitungsmaschine bezeichnet. Am Maschinengestell 1 sind eine Ablagewanne 2 für die Aufnahme von fertig bearbeiteten Kabeln und ein Transportband 3 für den Abtransport der Kabel angeordnet. Ein Steuerschrank 4 enthält die zum Steuern des Kabelverarbeitungsprozesses erforderliche Einrichtung. Mit 5 ist ein Bandantrieb bezeichnet, mittels welchen das unbearbeitete Kabel 6 von einer nicht dargestellten Rolle abgezogen und verschiedenen Bearbeitungsstationen zugeführt wird. Für einen derartigen Bandantrieb kann beispielsweise eine Einrichtung gemäss der europäischen Patentanmeldung 90 114421.2 verwendet werden. Am Maschinengestell 1 sind eine erste und eine zweite Baugruppe 7, 8 befestigt, mittels welchen das Kabel festgehalten und in verschiedene Bearbeitungspositionen gebracht werden kann. Die Baugruppen 7, 8 werden nachfolgend anhand der Fig. 2 näher beschrieben. Zwischen der ersten und zweiten Baugruppe 7, 8 ist ein anhand der Fig. 3a und 3b näher beschriebener Schneidekopf 9 angeordnet, durch welchen das Kabel getrennt und abisoliert werden kann. Mit 10 und 11 sind eine erste und eine zweite am Maschinengestell 1 befestigte Bearbeitungsstation bezeichnet. Die Bearbeitungsstationen 10, 11 sind beispielsweise im Handel erhältliche Vorrichtungen, mit deren Hilfe Stecker oder andere Anschlusselemente auf die abisolierten Enden der Kabel aufgepresst werden können.

Gemäss Fig. 2 besteht die erste und zweite Baugruppe 7, 8 aus je einem Abzugsantrieb 12 und einem Schwenkantrieb 13, die an Trägern 14, 15 angeordnet und auf nicht weiter dargestellte Weise am durch gestrichelte Linien angedeuteten Maschinengestell 1 befestigt sind. Jeder Abzugsantrieb 12 weist eine Grundplatte 16 und ein erstes und zweites Lagerteil 17, 18 auf, wobei in der Grundplatte 16 die Welle 19 eines Motors 20, und im ersten und zweiten Lagerteil 17, 18 eine rechtwinklig zur Welle 19 verlaufende Spindel 21 gelagert ist. Ein auf der Welle 19 und ein auf der Spindel 21 fest sitzendes Kegelrad 22, 23 sind miteinander im Eingriff. Auf der Spindel 21 ist ein Support 24 angeordnet, der mittels Bolzen 25 im zweiten Lagerteil 18 geführt ist. Am Support 24 des Abzugsantriebes 12 der ersten Baugruppe 7 ist eine erste Klemmvorrichtung 26, und am Support 24 des Abzugsantriebes 12 der zweiten Baugruppe 8 eine zweite Klemmvorrichtung 27 befestigt. Die Klemmvorrichtungen 26, 27 dienen der Festhaltung des Kabels und können beispielsweise pneumatisch betätigt werden. Die Abzugsantriebe 12 können mittels eines Rechners gesteuert werden, wobei der Drehwinkel der Spindel 21 und damit der Verschiebeweg des Supports mit der Klemmvorrichtung 26 bzw. 27 und dem Kabel durch Programmierung vorgewählt werden kann.

Die Schwenkantriebe 13 bestehen aus je einer auf der Welle 28 eines weiteren Motors 29 sitzenden ersten Zahnscheibe 30 und einer zweiten, grösseren Zahnscheibe 31, die mittels eines Zahnriemens 32 miteinander verbunden sind. Die zweite Zahnscheibe 31 ist mit Keilen 33 auf einer Hohlwelle 34 bzw. 35 befestigt und mittels Kugellager 36 im Träger 14 bzw. 15 gelagert. Die dem Schwenkantriebe 13 der zweiten Baugruppe 8 zugeordnete Hohlwelle 35 besitzt einen Flansch 37, auf welchem der zugeordnete Abzugsantrieb 12 mit der Grundplatte 16 befestigt ist. Die Hohlwelle 34 des Schwenkantriebes 13 der ersten Baugruppe 7 weist keinen Flansch auf, wobei der zugeordnete Abzugsantrieb 12 mit der Grundplatte 16 auf der zweiten Zahnscheibe 31 befestigt ist. Die Grundplatte 16 ist jeweils derart befestigt, dass die Welle 19 des Motors 20 des Abzugsantriebes 12 koaxial in der Hohlwelle 34 bzw. 35 verläuft.

Gemäss den Fig. 3a und 3b weist der Schneidekopf 9 ein Werkzeug 40 und einen Antrieb 41 für die Betätigung des Werkzeuges 40 auf. Das Werkzeug 40 besteht aus einem ersten und einem zweiten Messerhalter 42, 43, in welchen je ein Trennmesser 44 und je zwei Abisoliermesser angeordnet sind. Die beispielsweise dargestellten Abisoliermesser sind Form-Abisoliermesser 45, die insbesondere für dünnwandige Isolationen verwendet werden. Wie näher anhand der Fig. 5a - 5d beschrieben, sind die Abisoliermesser gegenüber den Trennmessern 44 verkürzt. Die Messerhalter 42, 43 sind an je einem Hebel 46, 47 besfestigt, die an einem Träger 48 um einen gemeinsamen Drehpunkt schwenkbar gelagert sind. Der Antrieb 41 weist zwei ineinander greifende, am Träger 48 drehbar gelagerte Zahnräder 49, 50 auf, wobei das eine Zahnrad 49 über ein erstes Gelenk 51 mit dem einen Hebel 46, und das andere Zahnrad 50 über ein zweites Gelenk 52 mit dem anderen Hebel 47 verbunden ist. Am anderen Zahnrad 50 ist ein Zahnsegment 53 befestigt, das in ein auf der Welle 54 eines nicht weiter dargestellten Motors angeordnetes Ritzel 55 eingreift. Mit 56 ist eine Vertiefung im Träger 48 bezeichnet, in welcher der Isolationsabfall aufgefangen wird und durch ein Rohr 57 in einen nicht dargestellten Behälter fallen kann. Der Antrieb 41 kann mittels eines Rechners gesteuert werden, wobei die Zustellbewegung, der Arbeitshub und die Rückstellbewegung des Werkzeuges 40 durch Programmierung vorgewählt werden kann.

In den Fig. 4a - 4c sind mit 58 V-Abisoliermesser bezeichnet, wobei die Fig. 4a die Stellung der Messer bei Beginn des Trennens, Fig. 4b die Stellung bei Beendigung des Trennens und Fig. 4c die Stellung nach dem Einschneiden der Isolation zeigt. Die in den Fig. 4a und 4b dargestellten Stellungen gelten auch für Form-Abisoliermesser 45, wohingegen deren Stellung nach dem Durchschneiden der Isolation in der Fig. 3b dargestellt ist.

Gemäss den Fig. 5a - 5d sind sowohl die Form-Abisoliermesser 45 als auch die nicht dargestellten V-Abisoliermesser 58 in einem bestimmten festen Abstand D von den Trennmessern 44 angeordnet, wodurch eine gewünschte maximale Abisolierlänge festgelegt ist. Die Abisoliermesser sind gegenüber den Trennmessern 44 um einen Betrag K gekürzt, welcher derart bemessen ist, dass unter Berücksichtigung eines maximalen Kabeldurchmessers die Isolation unmittelbar nach dem Durchtrennen des Kabels von den Abisoliermessern noch nicht berührt wird. Mit 59 ist das abisolierte Kabelende und mit 60 der Isolationsabfall bezeichnet. Die anhand der Fig. 5a - 5d dargestellten Arbeitsgänge werden in der nachfolgenden Funktionsbeschreibung näher erläutert.

Die vorstehend beschriebene Einrichtung arbeitet wie folgt:

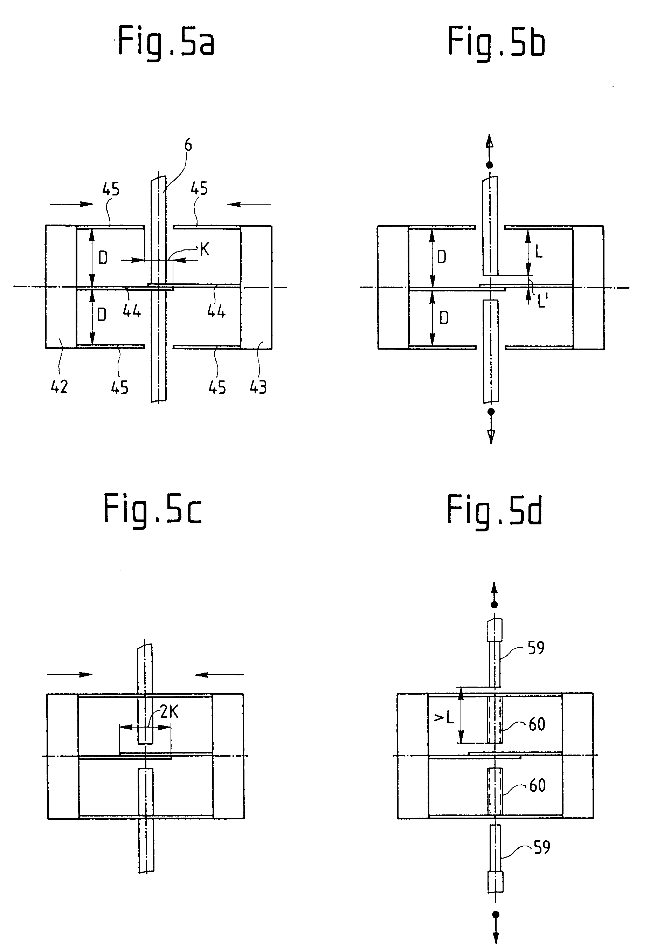

Der Bandantrieb 5 transportiert das von der nicht dargestellten Kabelrolle abgezogene Kabel 6 taktweise in den Bereich des Schneidekopfes 9 (Fig. 1). Hierbei wird das Kabel 6 jeweils nur um einen bestimmten, durch eine im Bandantrieb 5 vorgesehene Längenmesseinrichtung kontrollierten Betrag vorgeschoben, welcher der gewünschten Länge der herzustellenden Kabelabschnitte entspricht. Zu diesem Zeitpunkt sind die Klemmvorrichtungen 26, 27 (Fig. 2) geöffnet und das Werkzeug 40 des Schneidekopfes 9 ist in der Ausgangsstellung. Hierbei befinden sich die Messerhalter 42, 43 bei einem auf die Mittelsenkrechte bezogenen Winkel von $\alpha_0$ ca. 45° mit den Trennmessern 44 und den Abisoliermessern 45 bzw. 58 unterhalb einer durch die Lage des Kabels 6 bestimmten, horizontal verlaufenden Kabelebene (Fig. 3a). Nach dem Festklemmen des Kabels 6 in den Klemmvorrichtungen 26, 27 wird der Antrieb 41 eingeschaltet und die Messerhalter 42, 43 gegen das Kabel 6 geschwenkt, wobei bei einem Winkel der Messerhalter von beispielsweise $\alpha_1 = 7,6°$ das Trennen des Kabels beginnt und bei einem Winkel $\alpha_2 = 4,8°$ beendet ist (Fig. 4a, 4b). Nach diesem ersten Teil des Arbeitshubes wird der Antrieb 41 abgeschaltet, wobei sich die Trennmesser 44 überdecken und die Form-Abisoliermesser 45 bzw. die V-Abisoliermesser 58 die Isolation des Kabels noch nicht berühren (Fig. 5a, 4b). Nun werden die Abzugsantriebe 12 eingeschaltet und die Kabelenden von den Trennmessern 44 um einen Betrag L' zurückgezogen der so bemessen ist, dass eine gewünschte Abisolierlänge L = D - L' eingestellt wird (Fig. 5b). Nach dem Abschalten der Abzugsantriebe 12 wird der Antrieb 41 wieder eingeschaltet, wobei während eines zweiten Teiles des Arbeitshubes die Isolation eingeschnitten wird. Das Einschneiden ist bei V-Abisoliermessern 58 je nach Kabelquerschnitt bei einem Winkel der Messerhalter von beispielsweise $\alpha_3 = 2,2° - 0°$ beendet (Fig. 4c), wohingegen das Einschneiden bei Form-Abisoliermessern 45 bei einem Winkel von 0° beendet ist (Fig. 3b, 5c) und die Trennmesser 44 sich um einen Betrag 2K überdecken. Danach werden die Abzugsantriebe 12 wieder eingeschaltet und die Kabelenden um einen Betrag der grösser als die Abisolierlänge L ist zurückgezogen. Hierbei wird der Isolationsabfall 60 bei noch geschlossenen Abisoliermessern 45 bzw 58 von den Kabelenden abgezogen (Fig. 5d) und über die Vertiefung 56 und das Rohr 57 (Fig. 3a, 3b) dem nicht dargestellten Abfallbehälter zugeführt. Nach dem Rückstellen der Messerhalter 42, 43 in die Ausgangsstellung unterhalb der Kabelebene (Fig. 3a) werden die Kabelenden mittels der Schwenkantriebe 13 der Baugruppen 7, 8 in der Kabelebene zu den Bearbeitungsstationen 10, 11 geschwenkt (Fig. 1, Positionen I, II). Dort werden auf die abisolierten Kabelenden 59 beispielsweise Stecker aufgepresst. In einer Position III des Schwenkantriebes 13 werden die fertig bearbeiteten Kabel in der Ablagewanne 2 abgelegt.

Um die abisolierten Kabelenden 59 zu schützen, wenn keine Stecker oder andere Anschlusselemente aufgepresst werden, werden die Kabelenden mittels der Abzugsantriebe 12 nur um einen Betrag der kleiner als die Abisolierlänge L ist zurückgezogen, so dass der Isolationsabfall 60 auf dem Kabelende sitzen bleibt.

Bezugszeichenliste für Einrichtung zum Trennen und Abisolieren elektrischer Kabel.

| | |
|---|---|
| 1 | Maschinengestell |
| 2 | Ablagewanne |
| 3 | Transportband |
| 4 | Steuerschrank |
| 5 | Bandantrieb |
| 6 | Kabel |
| 7 | Erste Baugruppe |
| 8 | Zweite Baugruppe |
| 9 | Schneidekopf |
| 10 | Erste Bearbeitungsstation |
| 11 | Zweite Bearbeitungsstation |
| 12 | Abzugsantrieb |
| 13 | Schwenkantrieb |
| 14 | Träger |
| 15 | Träger |
| 16 | Grundplatte |
| 17 | Erstes Lagerteil |
| 18 | Zweites Lagerteil |
| 19 | Welle |
| 20 | Motor |
| 21 | Spindel |
| 22 | Kegelrad |
| 23 | Kegelrad |
| 24 | Support |

| 25 | Bolzen |
| 26 | Erste Klemmvorrichtung |
| 27 | Zweite Klemmvorrichtung |
| 28 | Welle |
| 29 | Weiterer Motor |
| 30 | Erste Zahnscheibe |
| 31 | Zweite Zahnscheibe |
| 32 | Zahnriemen |
| 33 | Keile |
| 34 | Hohlwelle |
| 35 | Hohlwelle |
| 36 | Kugellager |
| 37 | Flansch |
| 40 | Werkzeug |
| 41 | Antrieb |
| 42 | Erster Messerhalter |
| 43 | Zweiter Messerhalter |
| 44 | Trennmesser |
| 45 | Form - Abisoliermesser |
| 46 | Hebel |
| 47 | Hebel |
| 48 | Träger |
| 49 | Zahnrad |
| 50 | Zahnrad |
| 51 | Erstes Gelenk |
| 52 | Zweites Gelenk |
| 53 | Zahnsegment |
| 54 | Welle |
| 55 | Ritzel |
| 56 | Vertiefung |
| 57 | Rohr |
| 58 | V - Abisoliermesser |
| 59 | Abisoliertes Kabelende |
| 60 | Isolationsabfall |

**Patentansprüche**

1. Einrichtung zum Trennen und Abisolieren elektrischer Kabel in einer Kabelverarbeitungsmaschine, wobei die Einrichtung ein Werkzeug (40) aufweist, das aus einem ersten und einem zweiten Messerhalter (42, 43) besteht, in welchen je ein Trennmesser (44) und zwei Abisoliermesser (45, 58) angeordnet sind, und wobei ein Antrieb (41) für die Betätigung des Werkzeuges (40) vorgesehen ist,

   dadurch gekennzeichnet,
   - dass die Abisoliermesser (45, 58) in einem bestimmten, festen Abstand (D) vom Trennmesser (44) angeordnet sind, wobei der Abstand (D) einer maximalen, mit dem Werkzeug (40) erreichbaren Abisolierlänge entspricht,
   - dass die Abisoliermesser (45, 58) kürzer als die Trennmesser (44) sind, wobei der gekürzte Betrag (K) derart bemessen ist, dass während eines ersten Teiles des Arbeitshubes des Werkzeuges (40) das Kabel getrennt wird, ohne dass die Abisoliermesser (45, 48) die Isolation des Kabels einschneiden,
   - dass zwei Abzugsantriebe (12) vorgesehen sind, mittels welchen die durch die Trennung hergestellten Kabelenden von den Trennmessern (44) zurückgezogen und auf eine Abisolierlänge eingestellt werden, die innerhalb eines durch die maximale Abisolierlänge definierten Bereiches liegt, und
   - dass während eines zweiten Teiles des Arbeitshubes des Werkzeuges (40) die Isolation eingeschnitten und während eines weiteren Teiles der Rückzugsbewegung der Kabelenden der Isolationsabfall (60) bei in der Schneideposition verharrenden Abisoliermessern (45, 48) vom Kabel abgezogen wird.

2. Einrichtung nach Patentanspruch 1,

   dadurch gekennzeichnet,
   - dass die Messerhalter (42, 43) an je einem Hebel (46, 47) befestigt sind, die an einem Träger (48) um einen gemeinsamen Drehpunkt schwenkbar gelagert sind,
   - dass der Antrieb (41) für die Betätigung des Werkzeuges (40) zwei ineinander greifende, am Träger (48) drehbar gelagerte Zahnräder (49, 50) aufweist, wobei das eine Zahnrad (49) über ein erstes Gelenk (51) mit dem einen Hebel (46), und das andere Zahnrad (50) über ein zweites Gelenk (52) mit dem anderen Hebel (47) verbunden ist, und
   - wobei am anderen Zahnrad (50) ein Zahnsegment (53) befestigt ist, das in ein auf der Welle (54) eines Motors angeordnetes Ritzel (55) eingreift.

3. Einrichtung nach Patentanspruch 1,

   dadurch gekennzeichnet,
   - dass der Abzugsantrieb (12) eine Grundplatte (16) mit einem ersten und zweiten Lagerteil (17, 18) aufweist, wobei in der Grundplatte (16) die Welle (19) eines Motors (20), und im ersten und zweiten Lagerteil (17, 18) eine rechtwinklig zur Welle (19) verlaufende Spindel (21) gelagert ist,
   - dass ein auf der Welle (19) und ein auf der Spindel (21) sitzendes Kegelrad (22, 23) miteinander im Eingriff stehen,
   - dass auf der Spindel (21) ein Support (24) angeordnet ist, der mittels Bolzen (25) im zweiten Lagerteil (18) geführt ist und an dem eine Klemmvorrichtung (26, 27) für die Festhaltung des Kabels befestigt ist.

4. Einrichtung nach Patentanspruch 2, wobei in den Messerhaltern (42, 43) Form-Abisoliermesser (45) oder V-Abisoliermesser (58) angeordnet sind,

dadurch gekennzeichnet,

dass der Antrieb (41) für die Betätigung des Werkzeuges (40) mittels eines Rechners gesteuert wird, wobei die Stellungen der Messerhalter (42, 43) während des Arbeitshubes in Abhängigkeit von der Dicke der Isolation und der Art der verwendeten Abisoliermesser (45, 58) durch Programierung vorgewählt werden können.

5. Einrichtung nach Patentanspruch 3,

dadurch gekennzeichnet,

dass die Abzugsantriebe (12) mittels eines Rechners gesteuert werden, wobei der Drehwinkel der Spindeln (21) und damit der Rückzug der Kabelenden auf eine gewünschte Abisolierlänge sowie der weitere Rückzug zwecks Abziehens des Isolationsabfalls (60) durch Programmierung vorgewählt werden kann.

# Fig. 1

# Fig. 2

# Fig.3a

# Fig.3b

# Fig.4a

# Fig.4b

# Fig.4c

...

# Fig.5a

# Fig.5b

# Fig.5c

# Fig.5d

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 091 695 (FUNCIK ET AL.) <br> * Ansprüche 1,2; Abbildungen 1-5 * <br> --- | 1,4,5 | H02G1/12 |
| A | US-A-4 275 619 (SHIMIZU) <br> * Spalte 3, Zeile 1 - Spalte 6, Zeile 57; Abbildungen 1-11 * <br><br> ----- | 1 | |
| | | | **RECHERCHIERTE SACHGEBIETE (Int. Cl.5)** |
| | | | H02G |

Der vorliegende Recherchenbericht wurde für alle Patentansprüche erstellt

| Recherchenort | Abschlußdatum der Recherche | Prüfer |
|---|---|---|
| DEN HAAG | 16 JULI 1992 | DEMOLDER J. |